Europäisches Patentamt

European Patent Office

Office européen des brevets

(19)

(11) Veröffentlichungsnummer: **0 029 565**
**A1**

(12) ## EUROPÄISCHE PATENTANMELDUNG

(21) Anmeldenummer: **80107112.7**

(22) Anmeldetag: **17.11.80**

(51) Int. Cl.³: **F 24 J 3/02**

(30) Priorität: **24.11.79 DE 2947450**
**02.04.80 DE 3012814**

(43) Veröffentlichungstag der Anmeldung:
**03.06.81 Patentblatt 81/22**

(84) Benannte Vertragsstaaten:
**AT BE CH DE FR GB IT LI LU NL SE**

(71) Anmelder: **Boettcher, Alfred, Prof. Dr.**
**Hangstrasse 11**
**D-5100 Aachen(DE)**

(72) Erfinder: **Boettcher, Alfred, Prof. Dr.**
**Hangstrasse 11**
**D-5100 Aachen(DE)**

(74) Vertreter: **Müller-Gerbes, Margot, Dipl.-Ing.**
**c/o Firma DYNAMIT NOBEL AKTIENGESELLSCHAFT**
**-Patentabteilung- Postfach 1209**
**D-5210 Troisdorf/Bez.Köln(DE)**

(54) Flexibler Wasserkollektor.

(57) Solarer Flachkollektor (1) aus Kunststoff zur Erwärmung von Flüssigkeiten, wobei die zu erwärmende Flüssigkeit zwischen zwei Kunststoffolien (7,8) durch ein poröses Flächengebilde (3) fließt.

Fig 1b

EP 0 029 565 A1

14. Nov. 1980
OZ 80083 MG/Bd

Prof. Dr. Alfred Boettcher
Aachen

Flexibler Wasserkollektor

Um die spezifischen Kollektorkosten von Anlagen zur solaren Erwärmung von Brauchwasser herabzusetzen, sind im Kollektorbau zunehmend Kunststoffe verwandt worden. Die technischen Möglichkeiten ganz aus Kunststoff bestehender Flachkollektoren werden einerseits durch die im Vergleich zu Metall geringe Warmfestigkeit, andererseits durch die relativ geringe Wärmeleitfähigkeit aller Kunststoffe begrenzt.

Der prinzipielle Aufbau bisheriger Kunststoff-Wasserkollektoren besteht in der Nebeneinanderreihung von Kunststoffschläuchen, die an ihren Enden durch ein Sammelrohr verbunden sind. Lösungen dieser Art haben den grundsätzlichen Nachteil, daß mit wachsenden Querschnitten der parallel geschalteten Einzelschläuche das Flüssigkeitsvolumen pro m$^2$ groß und damit die Aufheizgeschwindigkeit klein wird, mit geringer werdenden Querschnitten entweder das Verhältnis von Kunststoff- zu wasserführendem Querschnitt zu groß oder die Festigkeit zu gering wird.

Diese Nachteile werden erfindungsgemäß dadurch vermieden, daß das Wasser nicht durch eine Mehrzahl von Kunststoff-Schläuchen fließt, sondern durch poröse Matten, die zwischen zwei Kunststoffolien eingeschlossen sind. Auf diese Weise wird eine hinreichend gleichmäßige Durchströmung der gesamten Kollektorfläche bei gleichzeitig wesentlich verringertem Flüssigkeitsvolumen pro $m^2$ erreicht. Die porösen Matten können entweder aus Kunststoff oder aus Glasfasern bestehen. Kunststoffmatten können aus Schaumstoff bestehen, bei dem zur Erzielung ausreichender Saugwirkung über 20 % der Poren offen sind. Durch einen hohen Prozentsatz offener Poren wird zugleich der innere Strömungswiderstand der Matten erniedrigt. Der Kunststoffschaum bzw. die Glasfasern können dunkel gefärbt sein, um einen Teil der die Deckfolie durchdringenden Sonneneinstrahlung zu absorbieren. Die unter der porösen Matte liegende Kunststoffolie ist dunkel gefärbt und absorbiert den durch die poröse Matte hindurchtretenden Anteil der Einstrahlung.

Der erfindungsgemäße Kollektor hat zwei weitere Vorteile:

1. Bei Einfrieren der Flüssigkeit im Kollektor wird dieser nicht zerstört, da in den porösen Matten kompressible Reservevolumina enthalten sind und das Volumen des Kollektors vergrößerungsfähig ist.

2. Solche Kollektoren können in großen Abmessungen (10 bis 100 $m^2$) hergestellt und einfach transportiert und montiert werden.

Um die poröse Matte zwischen den begrenzten Kunststofffolien zu fixieren, kann sie Öffnungen enthalten, durch die hindurch die beidseitigen Kunststoffolien miteinander verschweißt oder verklebt werden. Weiterhin können poröse Matte und beidseitige Kunststoffolie miteinander verklebt, verschweißt oder in anderer Weise verbunden werden, um den Anteil der zwischen der porösen Matte und

- 3 -

den beiderseiten Folien hindurchtretenden Flüssigkeit zu verringern.

Um einen besonders gleichmäßigen Durchfluß über die ganze Fläche ausgedehnter Kollektoren zu erzielen, kann an der Flüssigkeitseintrittsseite der porösen Matten über fast die ganze Breite des Kollektors ein Kunststoffrohr mit einer Mehrzahl von Öffnungen geringen Durchmessers auf der der Matte gegenüberliegenden Seite eingeschoben werden. Auf der Austrittsseite kann ebenfalls der Abfluß der Flüssigkeit durch ein eingeschobenes, zur Matte hin offenes Rohr erleichtert werden. Auf der Seite des Wasserzuflusses kann für den Fall eines zu großen Strömungswiderstandes in der porösen Matte oder dem angeschlossenen Gerät, der zu einer Erhöhung des Wasserdrucks auf der Zuflußseite führt, oberhalb des Zuflußkanals eine Überlauföffnung vorgesehen werden. Zur thermischen Isolation der Vorderseite befindet sich über den beiden, den wasserführenden Spalt begrenzenden Kunststoffolien eine dritte, transparente Folie, die durch eine transparente, hochporöse Kunststoffmatte von der darunterliegenden Folie getrennt ist. Dadurch entsteht eine isolierende Luftschicht mit geringer Wärmekonvektion. In die transparente, poröse Kunststoffmatte können zur Erhöhung der Lichtdurchlässigkeit Löcher einer Weite bis zu wenigen cm eingestanzt werden.

Kunststoff-Kollektoren für die solare Erwärmung von Flüssigkeiten, bei denen diese durch eine poröse Matte fließen, haben eine Reihe von Vorteilen. Voraussetzung ist jedoch, daß die Flüssigkeit zum ganz überwiegenden Teil zwischen Ein- und Austritt aus dem Kollektor durch die Poren der Matte fließt. Abhängig von der Dicke der Matte kann es jedoch bei nicht ebener Auslegung des Kollektors mehr oder minder häufig passieren, daß die Flüssigkeit einen nennenswerten Teil ihres Weges durch einen Spalt zwischen poröser Matte und einschließender Folie fließt, wodurch der Wirkungsgrad des Kollektors

- 4 -

abnimmt.

Eine überraschend einfache und zugleich zuverlässige Vermeidung dieses Nachteils wird in Weiterbildung der Erfindung dadurch erreicht, daß die poröse Matte um das Eintrittsrohr der Flüssigkeit herumgeschlagen und zwischen den einschließenden Folien befestigt wird (siehe Abbildung). Der Rau, in den die Flüssigkeit aus dem Zuleitungsrohr eintritt, wird dadurch (bis auf die kleinflächigen Randbereiche) ganz von der porösen Matte umschlossen, so daß die gesamte Flüssigkeit sofort von ihr aufgenommen wird. Diese Ausführungsform ist besonders wichtig für Kunststoffvliese aus hochelastischen Fasern, z.B. Polypropylen, die sich der weicheren, einschließenden Kunststoffolie nur unvollkommen anpassen.

Auch bei dieser, hohen Wirkungsgrad sichernden Ausführung kann die Funktionstauglichkeit des Kollektors auf lange Sicht dadurch gefährdet werden, daß die Durchlässigkeit der porösen Matte und schließlich sogar ihre mechanische Festigkeit durch den Bewuchs mit Algen oder sich ausbreitende Bakterienkulturen verringert wird. Sofern die Kollektoren Teil eines geschlossenen Kreislaufs sind, stehen verschiedene chemische Zusätze zur Verfügung, die solche Schäden zu vermeiden gestatten. Sehr schwierig ist es jedoch, einen geeigneten Schutz für offene Kreisläufe zu finden, der physiologisch voll akzeptavel ist. Hier hat sich als einzige wirksame und zugleich billig und einfach zu verwirklichende Maßnahme der Einbau eines Silberionendonators auf der Eintrittsseite der Flüssigkeit in den Kollektor ergeben. Eine besonders einfache Lösung ist die Einbringung einer Silberlegierung in Form von Draht, Blech oder Granalien in das Zulaufrohr der Flüssigkeit. Dadurch wird eine sehr niedrige, physiologisch unbedenkliche Silberionen-Konzentration im zulaufenden Wasser erreicht, die jedoch hinreicht, die Ansiedlung von Algen- und Bakterien-Kulturen im Inneren des Kollektors zu verhindern. Diese

- 5 -

Lösung ist zuverlässiger als eine Konditionierung der Flüssigkeit vor Eintritt in den Kollektor. Auch für den Betrieb in geschlossenen Kreisläufen kann diese Lösung gewählt werden, wenngleich in diesem Falle auch Kupferionendonatoren geeignet sind, sofern nicht Korrosionsschäden im Kreislauf befürchtet werden müssen.

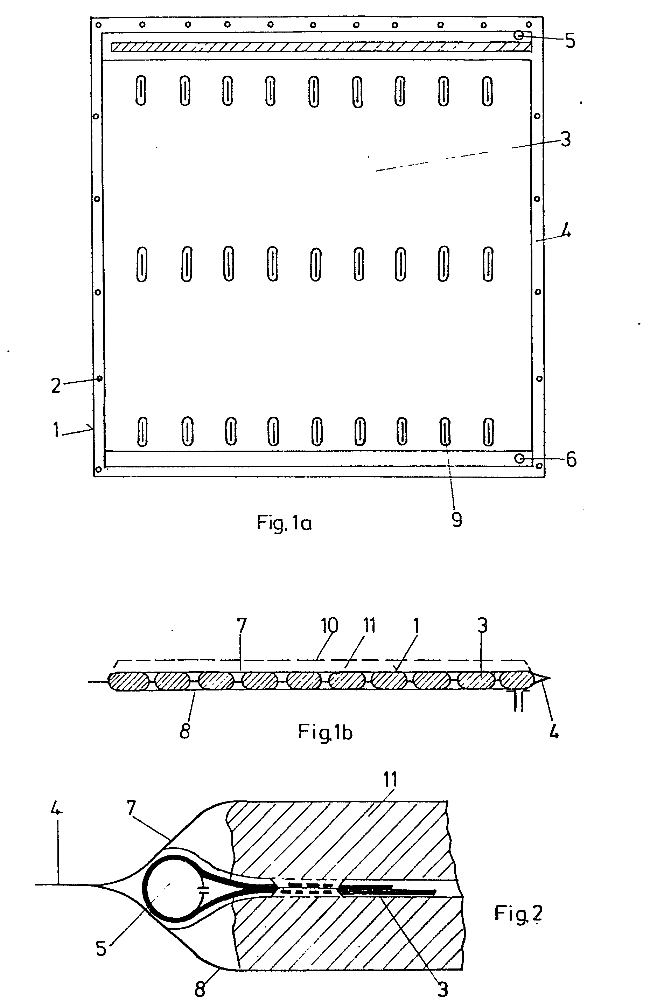

Die Abb. 1 a und b zeigen eine Ausführungsform des Kollektors:

Fig. 1 a   zeigt den Kollektor in Draufsicht,

Fig. 1 b   im Querschnitt,

Fig. 2   schematisch auszugsweise eine weitere Ausführung.

In den äußeren Rand 4 des Kollektors 1, in dem alle Folien verschweißt bzw. verklebt sind, sind Ösen 2 zur Befestigung des Kollektors auf einer Unterlage eingesetzt. Zur thermischen Isolation der Rückseite wird der Kollektor mit einer Isolationsschicht, z.B. Platten aus Kunststoffschaum mit geschlossenen Poren, unterlegt. Die porösen Matten 3 im Kollektor können aus Polyurethan, die Kunststoffolien aus UV-stabilisiertem PVC oder Polyäthylen bestehen.
Die Deckfolie 7 des Kollektors ist transparent, die Unterfolie 8 dunkel eingefärbt. Der Zufluß 5 kann eine Überlauföffnung aufweisen, mit 6 ist der Abfluß gekennzeichnet. Zur Fixierung der porösen Matte zwischen den Kunststoffolien weist sie Öffnungen 9 auf, wo Verschweißungsstellen zwischen den Kunststoffolien vorgesehen sind. Eine weitere transparente Folie 10, in Fig. 1 b gestrichelt dargestellt, kann zur thermischen Isolation über der Folie 7 angeordnet ist, in dem Zwischenraum kann weiteres transparentes poröses Material 11 zur Isolierung vorgesehen sein. In der Fig. 2 ist eine abgewandelte Form des isolierten Solarkollektors dargestellt, wobei die poröse Matte 3 beispielsweise eine Kunststoffmatte, zwischen Isolierschichten 11 eingebettet innerhalb der äußeren Kunststoffolien 7, 8 ist.
Die Matte 3 umschlingt hierbei das Zuflußrohr 5.

14. Nov. 1980
OZ 80083 MG/Bd

Patentansprüche

1. Solarer Flachkollektor aus Kunststoff zur Erwärmung von Flüssigkeiten, **d a d u r c h  g e k e n n - z e i c h n e t ,** daß die zu erwärmende Flüssigkeit zwischen zwei Kunststoffolien durch ein Glasfaservlies oder durch eine poröse Kunststoffmatte fließt, deren Poren zu über 20 % offen sind.

2. Solarer Flachkollektor aus Kunststoff zur Erwärmung von Flüssigkeiten nach Anspruch 1, dadurch gekennzeichnet, daß die poröse Flüssigkeit führende Schicht Öffnungen enthält, durch die hindurch die darüber und die darunter liegende Kunststoffolie miteinander verschweißt oder verklebt sind.

3. Solarer Flachkollektor aus Kunststoff zur Erwärmung von Flüssigkeiten nach Anspruch 1 bis 2, dadurch gekennzeichnet, daß auf der Oberseite des Kollektors durch eine weitere, transparente Folie ein Luftvolumen abgeschlossen wird, in dem sich eine transparente, hochporöse Kunststoffmatte einer Dicke von weniger als 20 mm befindet.

4. Solarer Flachkollektor aus Kunststoff zur Erwärmung von Flüssigkeiten nach Anspruch 3, dadurch gekennzeichnet, daß die obere hochporöse transparente Kunststoffmatte zur Erhöhung der Lichtdurchlässigkeit durchgehende Öffnungen einer Weite von wenigen cm enthält.

5. Solarer Flachkollektor aus Kunststoff zur Erwärmung von Flüssigkeiten nach Anspruch 1 bis 4, dadurch gekennzeichnet, daß die Zuführung der Flüssigkeit zur Eintrittseite der porösen Matte durch ein Kunststoffrohr erfolgt, das nur zur porösen Matte hin eine Mehrzahl von Öffnungen geringen Durchmessers hat.

6. Solarer Flachkollektor aus Kunststoff zur Erwärmung von Flüssigkeiten nach Anspruch 1 bis 5, dadurch gekennzeichnet, daß sich auf der Eintrittseite der Flüssigkeit in den Kollektor oberhalb des Zuflußkanals eine Öffnung nach aussen befindet, durch die die Flüssigkeit im Falle eines zu hohen Strömungswiderstandes in der porösen Matte oder dem angeschlossenen Gerät in einen Überlauf austreten kann.

7. Solarer Flachkollektor aus Kunststoff zur Erwärmung von Flüssigkeiten, nach einem der Ansprüche 1 bis 6, dadurch gekennzeichnet, daß die poröse Matte, durch die die zu erwärmende Flüssigkeit fließt, an der Oberseite des Kollektors um das Rohr, durch das die Flüssigkeit eintritt, herumgeschlagen und zwischen den beiden einschließenden Folien befestigt wird.

8. Solarer Flachkollektor nach Anspruch 7, dadurch gekennzeichnet, daß auf der Eintrittsseite der Flüssigkeit ein Silber- oder Kupferionendonator eingebaut ist, der mit der Flüssigkeit direkten Kontakt hat.

9. Solarer Flachkollektor nach Anspruch 6, dadurch gekennzeichnet, daß als Donator metallischer Silber- oder Silberlegierungsdraht, -Blech oder -Granalien verwandt werden.

0029565

1/1

Fig. 1a

Fig. 1b

Fig. 2

Dynamit Nobel Aktiengesellschaft, Troisdorf

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A1 - 2 818 154 (HÖLTER) <br> * ganzes Dokument * <br> -- | 1 |
| | DE - A1 - 2 617 324 (BRITISH PETROLEUM CO.) <br> * Seite 6, Absatz 2 bis Seite 7, Absatz 2* <br> -- | 1 |
| | DE - U - 7 625 555 (BRÜCHER) <br> * Seite 1, Absatz 4; Seite 1, Absatz 5; Seite 2, Absatz 2 * <br> -- | 1,3,5 |
| | US - A - 4 169 460 (POPOVICH et al.) <br> * Spalte 3, Zeilen 11 bis 21, Zeilen 30 bis 33 * <br> -- | 3,4 |
| A | WO - A1 - 79/00225 (CROMBIE et al.) <br> * ganzes Dokument * <br> -- | 1 |
| A | EP - A1 - 0 000 992 (DAVIDSON) <br> * Seite 6, Zeilen 5 bis 25 * <br> ---- | 1 |

**KLASSIFIKATION DER ANMELDUNG (Int. Cl.³)**

F 24 J 3/02

**RECHERCHIERTE SACHGEBIETE (Int. Cl.³)**

F 24 J 3/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

X  Der vorliegende Recherchenbericht wurde für alle Patentansprüche erstellt.

| Recherchenort | Abschlußdatum der Recherche | Prüfer |
|---|---|---|
| Berlin | 26-02-1981 | PIEPER |

EPA form 1503.1 06.78